(19) Europäisches Patentamt
European Patent Office
Office européen des brevets

(11) EP 1 564 952 A2

(12) EUROPEAN PATENT APPLICATION

(43) Date of publication:
17.08.2005 Bulletin 2005/33

(51) Int Cl.7: H04L 27/26

(21) Application number: 05001949.6

(22) Date of filing: 31.01.2005

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(30) Priority: 12.02.2004 KR 2004009403

(71) Applicants:
- Samsung Electronics Co., Ltd.
  Suwon-si, Gyeonggi-do (KR)
- Yonsei University
  Seoul (KR)

(72) Inventors:
- Lee, Sang-Jin
  Dept. of Elec. and Elec. Engineering
  Seodaemun-gu Seoul (KR)
- Seo, Jong-Soo
  Dept. of Elec. and Elec. Engineering
  Seodaemun-gu Seoul (KR)
- Kim, Eung-Sun
  Yeongtong-gu Suwon-si Gyeonggi-do (KR)
- Lee, Jong-Hyeuk
  Yeongtong-gu Suwon-si Gyeonggi-do (KR)

(74) Representative: Grünecker, Kinkeldey,
Stockmair & Schwanhäusser Anwaltssozietät
Maximilianstrasse 58
80538 München (DE)

# (54) Symbol timing synchronization method for OFDM based communication system

(57) A synchronization method in an OFDM based communication system. A transmitting side generates and transmits an OFDM symbol having a constant cyclic prefix, independent of time domain data symbols that are to be transmitted. A receiving side estimates a timing synchronization error based on the known cyclic prefix. Because the timing synchronization error is estimated based on the constant cyclic prefix, which is always known, a highly reliable correlation is achieved, thereby improving the accuracy of synchronization.

FIG.1

Printed by Jouve, 75001 PARIS (FR)

**Description**

The present invention relates generally to a mobile communication system, and more particularly to a timing and frequency synchronization method for an OFDM (Orthogonal Frequency Division Multiplexing) based mobile communication system.

Next generation mobile communications require high rate and high quality data transmission to support various high quality multimedia services. Recently, vigorous research has been performed on a technique, called "OFDM", in order to meet these requirements.

OFDM has a higher frequency usability because it uses a plurality of orthogonal carriers, and is also robust against Inter-Symbol Interference (ISI), caused by frequency selective fading channels, because it extends the symbol period proportional to the number of subcarriers while maintaining the data transfer rate.

OFDM generally decreases the ISI and Inter-Carrier Interference (ICI) by inserting a guard interval, which is longer than the maximum delay spread of a channel, between OFDM symbols to maintain the orthogonality between the subcarriers.

Timing and frequency synchronization between a transmitter and a receiver must be obtained in order to maintain the orthogonality between the subcarriers. To accomplish this, a timing and frequency synchronization method has been proposed, which uses the correlation between a guard interval and a Cyclic Prefix (CP).

The correlation between the guard interval and the cyclic prefix can be expressed by Equation 1:

Equation 1

$$\Phi_n = \frac{|\phi_n|}{(P_n)^2} ,$$

where

$$\phi_n = \sum_{k=0}^{G-1} \left( r_{j,n+k}^* r_{j,n+k+P} \right) \text{ and } P_n = \sum_{k=0}^{G-1} \left| r_{j,n+k+P} \right|^2 .$$

This method enables continuous synchronization estimation, but decreases the reliability of the correlation between the guard interval and the cyclic prefix due to noise and multiple paths.

To overcome this problem, another synchronization method has been proposed, which uses a binary prefix of {+1, -1} in the time domain, instead of inserting the guard interval using the cyclic prefix.

As can be seen from Equation 2, this synchronization method based on the binary prefix takes the correlation between the known binary prefix and a received signal, thereby increasing the reliability and thus achieving an accurate frequency-offset estimation.

Equation 2

$$\Psi_n = \frac{|\psi_{q,n}|^2}{(P'_n)^2} ,$$

where

$$\psi_{q,n} = \sum_{k=0}^{P-1} \left( s_{q,k}^* r_{j,n+k} \right) \text{ and } P'_n = \sum_{k=0}^{P-1} \left| r_{j,n+k} \right|^2 .$$

However, this method has no guard interval generated by a cyclic prefix in multipath environments. As a result, a delayed signal causes ISI to an original signal.

A different synchronization method, which has a guard interval and uses a prefix or a training sequence, also has a problem in that it decreases the transfer rate.

Therefore, the present invention has been designed in view of the above and other problems.

It is the object of the present invention to provide a synchronization method for an OFDM based communication system, which inserts a known uniform guard interval into each OFDM symbol, thereby improving the reliability of frequency offset estimation.

This object is solved by the subject matter of the independent claims.

Preferred embodiments are defined in the dependent claims.

In accordance with an aspect of the present invention, the above are accomplished by a synchronization method for an OFDM based communication system in which a transmitting side generates and transmits an OFDM symbol having a constant cyclic prefix, independent of a time domain data symbol that is to be transmitted, and a receiving side uses the cyclic prefix to estimate a timing synchronization error. The cyclic prefix is dependent on a frequency domain data symbol corresponding to the time domain data symbol. The OFDM symbol is generated in the following manner. A parity symbol is generated according to a frequency domain data symbol. The parity symbol enables the cyclic prefix to occur in the time domain when inverse Fourier transform is performed, and the data symbol and the parity symbol are inverse Fourier transformed to generate an OFDM symbol.

In accordance with another aspect of the present invention, there is provided a synchronization method for an OFDM based communication system, wherein data symbols generated through modulation are serial-to-parallel converted so that the data symbols are output in parallel, and at least one parity symbol is generated using the data symbols output in parallel. Then, an OFDM symbol including the cyclic prefix is generated by inverse Fourier transforming the data symbols and the parity symbol. The cyclic prefix is always the same. The parity symbol is generated depending on a data symbol in the frequency domain. The parity symbol is generated in the following manner.

First, a data signal vector is generated by inverse Fourier transforming the data symbols output in parallel. Then, subtraction is performed between the data signal vector and a reference signal vector corresponding thereto, and then multiplication is performed between the reference signal vector and a vector obtained by the subtraction, consequently obtaining the parity symbol. The reference signal vector is provided by a mapping table in which a corresponding reference signal vector is mapped to a data signal vector.

In accordance with yet another aspect of the present invention, there is provided an OFDM transmitter comprising a data source for modulating data for transmission to generate a transmission signal; a serial/parallel converter for serial-to-parallel converting the transmission signal output from the data source; a parity symbol generator for generating at least one parity symbol using a signal output from the serial/parallel converter; and a first inverse Fourier transformer for generating an OFDM symbol by inverse Fourier transforming the signal output from the serial/parallel converter and the parity symbol. The parity symbol generator includes a second inverse Fourier transformer for inverse Fourier transforming the signal output from the serial/parallel converter; a reference signal generator for providing a reference signal corresponding to the signal output from the serial/parallel converter; a subtractor for performing an operation of subtraction of the signal output from the serial/parallel converter and the reference signal provided from the reference signal generator; and a multiplier for performing an operation of multiplication of a signal output from the subtractor and the reference signal to output a parity symbol. The reference signal generator includes a mapping table in which corresponding reference signals are mapped to signals output from the second inverse Fourier transformer. The parity symbol is generated depending on the signal output from the serial/parallel converter. The OFDM symbol includes a cyclic prefix. The cyclic prefix, which is always substantially the same, occurs in the OFDM symbol.

The above object and other aspects, features, and advantages of the present invention will be more clearly understood from the following detailed description taken in conjunction with the accompanying drawings, in which:

FIG. 1 is a block diagram illustrating an OFDM transmission device according to a preferred embodiment of the present invention;

FIG. 2 is a block diagram illustrating in detail a parity symbol generator as illustrated in FIG. 2;

FIG. 3 is a conceptual diagram illustrating how a known cyclic prefix is generated in a synchronization method for an OFDM based communication system according to a preferred embodiment of the present invention; and

FIG. 4A is a graph illustrating an inverse Fourier transformed time-domain OFDM signal in the synchronization method for the OFDM based communication system according to a preferred embodiment of the present invention; and

FIG. 4B is a graph illustrating known cyclic prefixes separated from the OFDM signal illustrated in FIG. 4A.

Preferred embodiments of the present invention will be described in detail herein below with reference to the accompanying drawings. In the following description of the present invention, a detailed description of known functions and configurations incorporated herein will be omitted when it may make the subject matter of the present invention rather unclear.

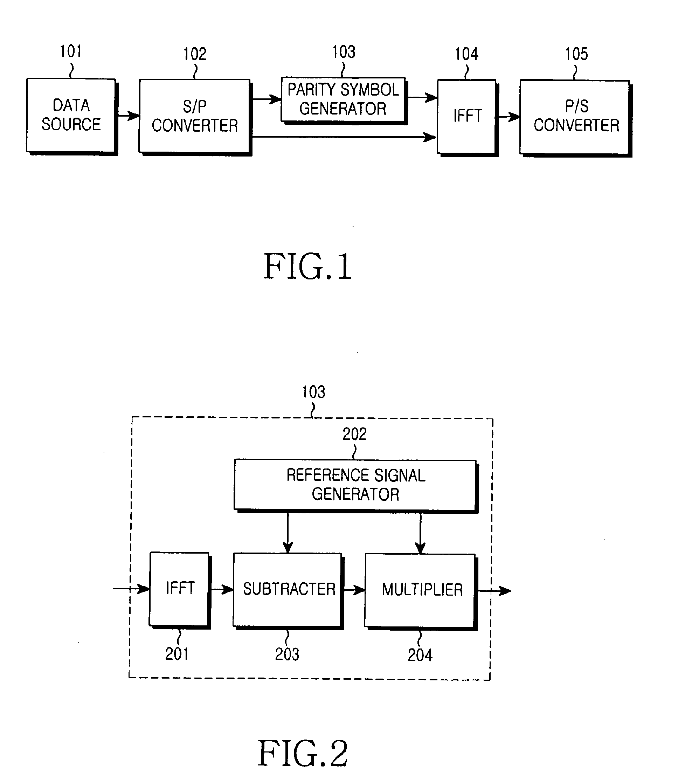

FIG. 1 is a block diagram illustrating an OFDM transmission device according to a preferred embodiment of the present invention. As illustrated in FIG. 1, the OFDM transmission device includes a data source (or an information generator) 101, a serial/parallel (S/P) converter 102, a parity symbol generator 103, a first Inverse Fast Fourier Transformer (IFFT) 104, and a parallel/serial converter 105. The data source 101 modulates data for transmission to generate transmission symbols, and the serial/parallel converter 102 serial-to-parallel converts the transmission symbols output from the data source 101. Using the frequency-domain symbols output from the serial/parallel converter 102, the parity symbol generator 103 generates parity symbols determined according to data symbols in the frequency domain to obtain a known cyclic prefix in the time domain. The first IFFT 104 performs inverse Fourier transform of the symbols, output from the serial/parallel converter 102 and the parity symbol generator 103, to generate an OFDM symbol. The parallel/serial converter 105 parallel-to-serial converts and transmits the OFDM symbol output from the first IFFT 104.

FIG. 2 is a block diagram illustrating in detail the parity symbol generator 103. As illustrated in FIG. 2, the parity symbol generator 103 includes a second IFFT 201, a reference signal generator 202, a subtractor 203, and a multiplier 204. The second IFFT 201 performs inverse Fourier transform of the signal output from the serial/parallel converter 102 to convert it to a time domain signal. The reference signal generator 202 provides a reference signal for generating the parity symbol through mathematical operations with the signal output from the second IFFT 201. The reference signal generator 202 includes a mapping table in which corresponding reference signals are mapped to signals output from the second IFFT 201, to provide the reference signal for generating the parity symbol. In other words, the reference signal generator 202 includes a mapping table in which a corresponding reference signal vector is mapped to a data signal vector.

The subtractor 203 performs subtraction between the reference signal output from the reference signal generator 202 and the signal output from the second IFFT 201. The multiplier 204 performs multiplication between the signal output from the subtractor 203 and the signal output from the reference signal generator 202 to output a parity symbol.

In a synchronization method according to a preferred embodiment of the present invention, signals are pre-processed in the frequency domain so that the same known cyclic prefixes occur in the same positions of time domain signals after the IFFT (Inverse Fast Fourier Transform).

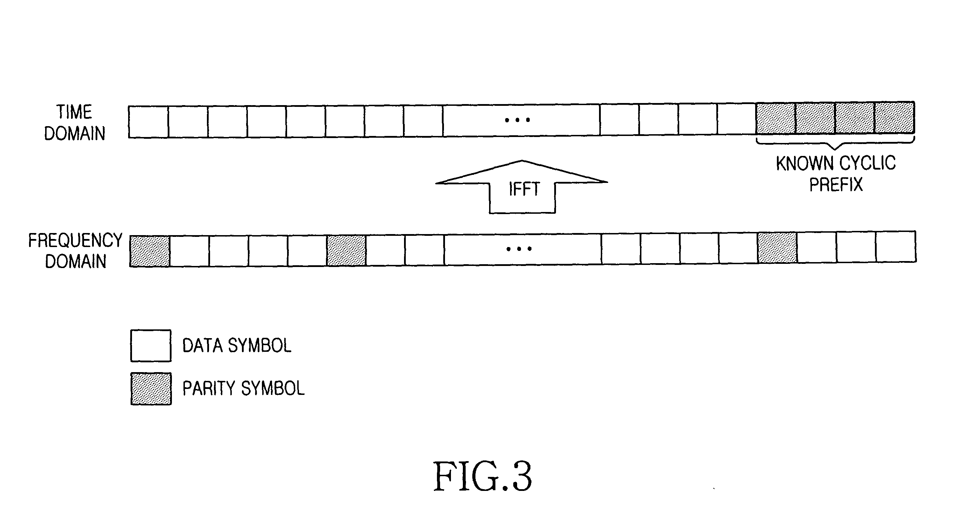

The parity symbol generator 103 uses data symbols output from the serial/parallel converter 102 to generate parity symbols determined by frequency-domain data symbols. The generated parity symbols, together with the frequency domain data symbols output from the serial/parallel converter 102, pass through the first IFFT 104 and the parallel/serial converter 105, and are then transmitted as a time domain symbol sequence as illustrated in FIG. 3.

The first IFFT 104 receives the parity symbols and the frequency domain symbols, and outputs them as a single OFDM symbol. As illustrated in FIG. 3, each of the OFDM symbols output from the first IFFT 104 includes a known cyclic symbol that is always the same, i.e., a constant cyclic symbol.

If the size of the first IFFT 201 is N and the number of the parity symbols is P, the OFDM signal produced by the IFFT can be expressed by Equation 3.

## Equation 3

$$x(n) = \sum_{k=0}^{N-1} X(k)e^{\frac{j2\pi kn}{N}}$$

Further, Equation 3 can be rearranged as shown below in Equation 4.

## Equation 4

$$x(n) = \sum_{\substack{k=0 \\ k \neq iM-1(i=1,\cdots,P)}}^{N-1} X(k)e^{\frac{j2\pi kn}{N}} + X(M-1)e^{\frac{j2\pi n(M-1)}{N}} + \cdots + X(PM-1)e^{\frac{j2\pi n(PM-1)}{N}},$$

where $M = \dfrac{N}{P}$

If the known cyclic prefix is separated from Equation 4, it can be expressed as in Equation 5.

## Equation 5

$$x(n) - \sum_{\substack{k=0 \\ k \neq iM-1(i=1,\cdots,M)}}^{N-1} X(k)e^{\frac{j2\pi kn}{N}} = X(M-1)e^{\frac{j2\pi n(M-1)}{N}} + \cdots + X(PM-1)e^{\frac{j2\pi n(PM-1)}{N}}$$

Additionally, Equation 5 can be expressed in matrix form as following Equation 6.

### Equation 6

$$A=BX$$

If

$$\sum_{\substack{k=0 \\ k \neq iM-1(i=1,\cdots,M)}}^{N-1} X(k)e^{\frac{j2\pi kn}{N}}$$

in Equation 5 is denoted by $x'(n)$, Equation 5 can be rearranged as in Equation 7.

### Equation 7

$$x(n)-x'(n)=X(M-1)e^{\frac{j2\pi n(M-1)}{N}} + \cdots + X(PM-1)e^{\frac{j2\pi n(PM-1)}{N}}$$

In Equation 7, x'(n) denotes transmission data symbols of an input transmission signal, and can be obtained by inserting zeros into portions of the input transmission signal where parity symbols are to be located. $x(n)$ denotes the value of a known cyclic prefix to be located at the n-th time. Accordingly, the matrix A in Equation 6 is expressed as an M x 1 matrix following Equation 8.

### Equation 8

$$A=[x(N)-x'(N)\ x(N-1)-x'(N-1)\ \cdots\ x(N-P+1)-x'(N-P+1)]^T$$

In Equation 8, $x(N),\ x(N-1),\cdots,\ x(N-P+1)$ correspond to a cyclic prefix to be inserted on the time axis.
Then, the matrix B in Equation 6 becomes a P x P matrix as in Equation 9.

### Equation 9

$$B = \begin{bmatrix} e^{\frac{j2\pi(N-P+1)(M-1)}{N}} & \cdots & \cdots & e^{\frac{j2\pi(N-P+1)(PM-1)}{N}} \\ e^{\frac{j2\pi(N-P+2))(M-1)}{N}} & \cdots & \cdots & e^{\frac{j2\pi(N-P+2))(PM-1)}{N}} \\ \vdots & & & \vdots \\ e^{\frac{j2\pi(N-1)(M-1)}{N}} & \cdots & \cdots & e^{\frac{j2\pi(N-1)(PM-1)}{N}} \\ e^{\frac{j2\pi(N)(M-1)}{N}} & \cdots & \cdots & e^{\frac{j2\pi(N)(PM-1)}{N}} \end{bmatrix}$$

Further, the matrix X in Equation 6 can be expressed as a P x 1 matrix as in Equation 10.

### Equation 10

$$X=[X(M\text{-}1)\ X(2M\text{-}1)\ \cdots\ X(PM\text{-}1)]^{T}$$

In Equation 10, $X(M\text{-}1),X(2M\text{-}1),\cdots,X((P\text{-}1)M\text{-}1),X(PM\text{-}1)$ denotes parity symbols to be inserted on the time axis for allowing the known cyclic prefix to be located at a predetermined location on the time axis.

An inverse matrix $B^{-1}$ must be calculated to solve the matrix equation of Equation 6. However, the inverse matrix $B^{-1}$ always has the same value, if the IFFT size N and the number P of parity symbols are fixed. This makes it possible to reduce the calculation amount of the inverse matrix $B^{-1}$ by providing a lookup table thereof.

The matrix X can be obtained through a matrix operation of the matrix A and the inverse matrix $B^{-1}$, and the obtained value is inserted on the time axis, thereby enabling every OFDM symbol to have a guard interval including the same known cyclic prefix.

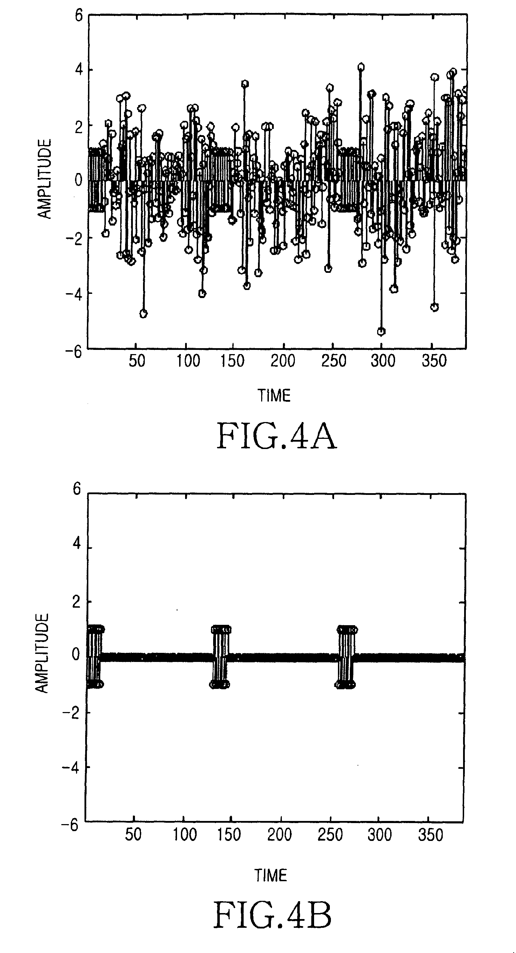

FIG. 4A is a graph showing an inverse Fourier transformed time-domain OFDM signal when the synchronization method according to the preferred embodiment of the present invention is applied to an OFDM system employing a 128-point IFFT. FIG. 4B is a graph showing known cyclic prefixes included in the OFDM signal shown in FIG. 4A.

It can be seen from FIGs. 4A and 4B that the same known cyclic prefix, defining a guard interval, occurs in every OFDM symbol in the synchronization method according to the present invention. In this embodiment, 16 consecutive signals having alternating amplitudes 1 and -1 are used as the known cyclic prefix.

As is apparent from the description above, a synchronization method according to the present invention increases bandwidth efficiency because it does not use a pilot signal for synchronization.

In addition, the synchronization method according to the present invention does not require a separate CP insertion process because the same known cyclic prefix (a constant cyclic prefix), serving as a guard interval, occurs in every OFDM symbol.

Further, the synchronization method according to the present invention achieves a highly reliable correlation and improve the accuracy of synchronization because the constant cyclic prefix is always received.

Although preferred embodiments of the present invention have been disclosed for illustrative purposes, those skilled in the art will appreciate that various modifications, additions, and substitutions are possible, without departing from the scope of the present invention as disclosed in the accompanying claims.

**Claims**

1.    A synchronization method using a cyclic prefix as a guard interval for an OFDM-based communication system, the method comprising the steps of:

generating and transmitting, by a transmitting side, an OFDM symbol including the cyclic prefix, which is constant and independent of a time domain data symbol that is to be transmitted; and
estimating, by a receiving side, a timing synchronization error using the cyclic prefix.

2. The method according to claim 1, wherein the cyclic prefix is dependent on a frequency domain data symbol corresponding to the time domain data symbol.

3. The method according to claim 1 or 2, wherein the step of generating the OFDM symbol comprises the steps of:

generating a parity symbol according to a frequency domain data symbol, said parity symbol enabling the cyclic prefix to occur in the time domain when an inverse Fourier transform is performed; and
inverse Fourier transforming the frequency domain data symbol and the parity symbol to generate the OFDM symbol.

4. A synchronization method for an OFDM-based communication system in which a transmitting side transmits an OFDM symbol including a cyclic prefix as a guard interval and a receiving side synchronizes with the transmitting side using the cyclic prefix, the method comprising the steps of:

serial-to-parallel converting data symbols generated through modulation;
outputting the data symbols in parallel;
generating at least one parity symbol using the data symbols output in parallel;
generating the OFDM symbol including the cyclic prefix by inverse Fourier transforming the data symbols and the parity symbols; and
transmitting the generated OFDM symbol.

5. The method according to claim 4, wherein the cyclic prefix is constant.

6. The method according to claim 4 or 5, wherein the parity symbol is generated depending on a data symbol in the frequency domain.

7. The method according to one of claims 4 to 6, wherein the step of generating the at least one parity symbol comprises the steps of:

generating a data signal vector by inverse Fourier transforming the data symbols output in parallel;
subtracting the data signal vector and a reference signal vector corresponding thereto; and
multiplying the reference signal vector and a vector obtained by subtracting the data signal vector and the reference signal vector to obtain the at least one parity symbol.

8. The method according to claim 7, wherein the reference signal vector is provided by a mapping table in which a corresponding reference signal vector is mapped to a data signal vector.

9. An OFDM transmitter for an OFDM-based communication system in which a transmitting side transmits an OFDM symbol including a cyclic prefix as a guard interval and a receiving side synchronizations with the transmitting side using the cyclic prefix, the OFDM transmitter comprising:

a data source for modulating data for transmission to generate a transmission signal;
a serial/parallel converter for serial-to-parallel converting the transmission signal output from the data source;
a parity symbol generator for generating at least one parity symbol using the signal output from the serial/parallel converter; and
a first inverse Fourier transformer for generating an OFDM symbol by inverse Fourier transforming the signal output from the serial/parallel converter and the at least one parity symbol.

10. The transmitter according to claim 9, wherein the at least one parity symbol is generated depending on the signal output from the serial/parallel converter.

11. The transmitter according to claim 9 or 10, wherein the OFDM symbol includes a cyclic prefix.

12. The transmitter according to claim 11, wherein the cyclic prefix is constant and occurs in the OFDM symbol.

**13.** The transmitter according to one of claims 9 to 12, wherein the parity symbol generator comprises:

a second inverse Fourier transformer for inverse Fourier transforming the signal output from the serial/parallel converter;

a reference signal generator for providing a reference signal corresponding to the signal output from the serial/parallel converter;

a subtractor for subtracting the signal output from the serial/parallel converter and the reference signal provided from the reference signal generator; and

a multiplier multiplying the signal output from the subtractor and the reference signal, to output the at least one parity symbol.

**14.** The transmitter according to claim 13, wherein the reference signal generator includes a mapping table in which corresponding reference signals are mapped to signals output from the second inverse Fourier transformer.

**15.** The transmitter according to claim 13, wherein the parity symbol is generated depending on the signal output from the serial/parallel converter.

**16.** The transmitter according to claim 13, wherein the OFDM symbol includes a cyclic prefix.

**17.** The transmitter according to claim 16, wherein the cyclic prefix is constant and occurs in the OFDM symbol.

101                  102                    103                 104              105

| DATA SOURCE | → | S/P CONVERTER | → | PARITY SYMBOL GENERATOR | → | IFFT | → | P/S CONVERTER |

FIG.1

103

202

REFERENCE SIGNAL GENERATOR

→ | IFFT | → | SUBTRACTER | → | MULTIPLIER | →

201                203                    204

FIG.2

EP 1 564 952 A2

TIME
DOMAIN

· · ·

KNOWN CYCLIC
PREFIX

IFFT

FREQUENCY
DOMAIN

· · ·

☐ DATA SYMBOL

▨ PARITY SYMBOL

FIG.3

FIG.4A

FIG.4B